# EUROPEAN PATENT APPLICATION

(11) **EP 4 550 431 A1**
(43) Date of publication of application: **07.05.2025**
(21) Application number: 23883074.9
(22) Date of filing: 24.10.2023
(51) Int. Cl.: H01M 4/04, B30B 11/18, B30B 11/20

(54) **DRY ELECTRODE MANUFACTURING APPARATUS**

(30) Priority: 24.10.2022 KR 20220137646
(71) Applicant: LG Energy Solution, Ltd., Seoul 07335 (KR)
(72) Inventor: KWAK, Sang-Min, Daejeon 34122 (KR); KANG, Seong-Wook, Daejeon 34122 (KR); YOON, Kyung-Hwan, Daejeon 34122 (KR); LEE, Ki-Seok, Daejeon 34122 (KR); LEE, Nam-Jeong, Daejeon 34122 (KR); LEE, Ho-Chan, Daejeon 34122 (KR); CHO, Won-Hak, Daejeon 34122 (KR); HAN, Jae-Sung, Daejeon 34122 (KR); PARK, Moon-Soo, Daejeon 34122 (KR); HWANG, Koo-Youn, Daejeon 34122 (KR)
(74) Representative: Plasseraud IP
(86) International application number: PCT/KR2023/016592
(87) International publication number: WO 2024/090969

(57) **Abstract**

A dry electrode manufacturing apparatus is disclosed. According to the present disclosure, the electrode manufacturing apparatus includes a powder sheeting device configured to shape a dry material including an electrode active material into a sheet; a calendaring device including at least one rolling unit, each rolling unit including a pair of rolling rolls to roll the electrode sheet supplied from the powder sheeting device; and a single lamination roll configured to laminate a current collector and the rolled electrode sheet with a target thickness through the calendaring device to form an electrode, wherein the lamination roll is disposed facing toward one of the pair of rolling rolls of the rolling unit that rolls the electrode sheet lastly.

## Description

### TECHNICAL FIELD

The present disclosure relates to a dry electrode manufacturing apparatus, and more particularly, to a dry electrode manufacturing apparatus that measures and adjusts the tension of an electrode sheet during a calendaring process to stably manufacture the electrode sheet and minimizes the likelihood that the electrode sheet will be broken after the calendaring process.

The present application claims priority to Korean Patent Application No. 10-2022-0137646 filed on October 24, 2022 in the Republic of Korea, the disclosure of which is incorporated herein by reference.

### BACKGROUND ART

Electrodes used in lithium secondary batteries are generally manufactured by stacking an electrode active material layer on a current collector, the electrode active material layer including an electrode active material and if necessary, a conductive material and a binder to bind them together. Wet manufacturing methods have been commonly used to manufacture the electrodes, and include applying a coating slurry including the electrode active material, the binder and the conductive material to the current collector and performing thermal treatment to remove a solvent. However, these methods need additional energy and process for drying a polymer film or effectively removing the solvent from the coating slurry and have low process efficiency and economic efficiency.

Accordingly, many dry manufacturing methods have been suggested to manufacture electrodes without using the coating slurry. These methods mix the electrode active material, the binder and the conductive material without a liquid medium such as the solvent or a dispersion medium and allow the powder mixture to pass through rolling rolls to make an electrode sheet.

However, in a calendaring process of allowing the electrode sheet to pass through the rolling rolls to manufacture the electrode having a target thickness, there are small differences in the feed and transport speed of the electrode sheet, the rotational speed between the rolling rolls and so on, causing electrode sheet jams frequently.

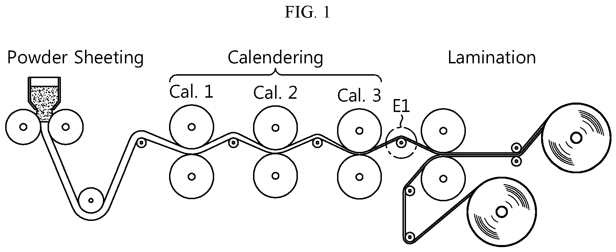

Additionally, the calendaring process may be repeated up to three times depending on the type of the active material and the process condition. For example, to manufacture the electrode having the target thickness, as shown in FIG. 1, the calendaring process may be performed in a sequential order (first, second, third). However, when the calendaring process is performed in this way, the electrode sheet gradually becomes thinner, and in turn, the breaking strength reduces and there is a higher likelihood that the electrode sheet will be broken. In particular, as indicated by 'E1' in FIG. 1, the electrode sheet moves to a lamination device in the air after last calendaring, and at this time, there is the highest likelihood that the electrode sheet will be broken.

### SUMMARY

### Technical Problem

The present disclosure is designed to solve the above-described problem, and therefore the present disclosure is directed to providing an electrode manufacturing apparatus for minimizing the likelihood that a finally rolled electrode sheet after a calendaring process will be broken.

The present disclosure is further directed to providing an electrode manufacturing apparatus for preventing electrode sheet jams during the calendaring process.

The problems to be solved by the present disclosure are not limited to the above-described problems, and these and other problems will be clearly understood by those skilled in the art from the following description.

### Technical Solution

To solve the above-described problem, an electrode manufacturing apparatus according to the present disclosure includes a powder sheeting device configured to shape a dry material including an electrode active material into a sheet; a calendaring device including at least one rolling unit, each rolling unit including a pair of rolling rolls to roll the electrode sheet supplied from the powder sheeting device; and a single lamination roll configured to laminate a current collector and the rolled electrode sheet with a target thickness through the calendaring device to form an electrode, wherein the lamination roll is disposed facing toward one of the pair of rolling rolls of the rolling unit that rolls the electrode sheet lastly.

The rolling unit may include an upper rolling roll; and a lower rolling roll located below the upper rolling roll, and a thickness of the electrode sheet may be adjusted as much as a gap between the upper rolling roll and the lower rolling roll.

The lamination roll may be disposed facing toward the lower rolling roll, and the electrode sheet and the current collector may be compressed together while passing between the lamination roll and the lower rolling roll.

The electrode manufacturing apparatus may further include a slitting unit to cut an edge of the electrode sheet, and the slitting unit may be disposed facing toward the lower rolling roll facing toward the lamination roll.

The slitting unit may be configured to cut two end portions of the electrode sheet in a width direction passing between the upper rolling roll and the lower rolling roll.

The at least one rolling unit may include a plurality of rolling units arranged spaced apart from each other, and the calendaring device may further include a tension control unit to measure a tension applied to the electrode sheet transported between the rolling units and control a rotational speed of the rolling roll.

The tension control unit may be configured to control the rotational speed of the rolling roll of the rolling unit disposed either in front of the electrode sheet or behind the electrode sheet or both.

At high tension in the electrode sheet, the tension control unit may be configured to decelerate the rotational speed of the rolling roll disposed behind the tension control unit (or accelerate the rotational speed of the rolling roll disposed in front of the tension control unit), and at low tension in the electrode sheet, may be configured to accelerate the rotational speed of the rolling roll disposed behind the tension control unit (or decelerate the rotational speed of the rolling roll disposed in front of the tension control unit).

The tension control unit may include a tension maintaining roll that is located on the electrode sheet and rotates; and a displacement detector to measure a displacement of the tension maintaining roll, and the tension control unit may be configured to measure the tension of the electrode sheet according to the displacement measured by the displacement detector, and control the rotational speed of the rolling roll based on the tension.

The tension control unit may further include a guide member including a guide slit coupled to two rotation axes of the tension maintaining roll to guide the tension maintaining roll to move up and down; and a loading member connected to the tension maintaining roll to apply constant load to the tension maintaining roll.

The tension control unit may be configured to decelerate the rotational speed of the rolling roll located behind the tension maintaining roll (or accelerate the rotational speed of the rolling roll disposed in front of the tension maintaining roll) based on the displacement when the tension maintaining roll changes up the position, and configured to accelerate the rotational speed of the rolling roll located behind the tension maintaining roll (or decelerate the rotational speed of the rolling roll disposed in front of the tension maintaining roll) based on the displacement when the tension maintaining roll changes down the position.

In another example, the tension control unit may include a tension sensing roll that is located on the electrode sheet and rotates; and a sensor to measure a load change of the tension sensing roll, and may be configured to control the rotational speed of the rolling roll according to the load change measured by the sensor.

The tension control unit may be configured to decelerate the rotational speed of the rolling roll located behind the tension sensing roll (or accelerate the rotational speed of the rolling roll disposed in front of the tension sensing roll) based on the load change when the load of the tension sensing roll increases, and may be configured to accelerate the rotational speed of the rolling roll located behind the tension sensing roll (or decelerate the rotational speed of the rolling roll disposed in front of the tension sensing roll) based on the load change when the load of the tension sensing roll decreases.

The powder sheeting device may include a pair of feed rolls to roll the dry material into a sheet shape, and the electrode manufacturing apparatus may further include a preliminary tension control unit to measure the tension applied to the electrode sheet transported between the powder sheeting device and the rolling unit and control the rotational speed of the feed roll or the rolling roll.

The at least one rolling unit may be a single rolling unit.

The electrode manufacturing apparatus may further include a winding roll on which the electrode is wound.

### Advantageous Effects

According to the present disclosure, it may be possible to provide the electrode manufacturing apparatus for stably manufacturing the dry electrode by minimizing the likelihood that the finally rolled electrode sheet after the calendaring process will be broken.

Additionally, the present disclosure may manufacture the dry electrode with improved process efficiency and economic efficiency by preventing electrode sheet jams.

Furthermore, the present disclosure may have many other effects, and these effects will be described in each embodiment. With regard to effects that may be easily inferred by those skilled in the art, the corresponding description is omitted.

### BRIEF DESCRIPTION OF THE DRAWINGS

FIG. 1 is a schematic diagram of a conventional electrode manufacturing apparatus.
FIG. 2 is a schematic diagram of an electrode manufacturing apparatus according to a first embodiment of the present disclosure.
FIG. 3 is a perspective view of a tension control unit of FIG. 2.
FIG. 4 is a diagram showing an example of operation of a tension control unit according to a first embodiment of the present disclosure.
FIG. 5 is a control flow diagram of the tension control unit of FIG. 4.
FIG. 6 is an enlarged diagram of a third rolling unit of FIG. 2.
FIG. 7 is a schematic diagram of an electrode manufacturing apparatus according to a second embodiment of the present disclosure.
FIG. 8 is a perspective view of a tension control unit of FIG. 7.
FIG. 9 is a control flow diagram of the tension control unit of FIG. 8.
FIG. 10 is a schematic diagram of an electrode manufacturing apparatus according to a third embodiment of the present disclosure.
FIG. 11 is a schematic diagram of an electrode manufacturing apparatus according to a fourth embodiment of the present disclosure.
FIG. 12 is a schematic diagram of an electrode manufacturing apparatus according to a fifth embodiment of the present disclosure.

### DETAILED DESCRIPTION

Hereinafter, exemplary embodiments of the present disclosure will be described in detail with reference to the accompanying drawings. Prior to the description, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation. Therefore, the embodiments described herein and illustrations in the accompanying drawings are exemplary embodiments of the present disclosure to describe the technical aspect of the present disclosure and are not intended to be limiting, and thus it should be understood that a variety of other equivalents and modifications could have been made at the time the application was filed.

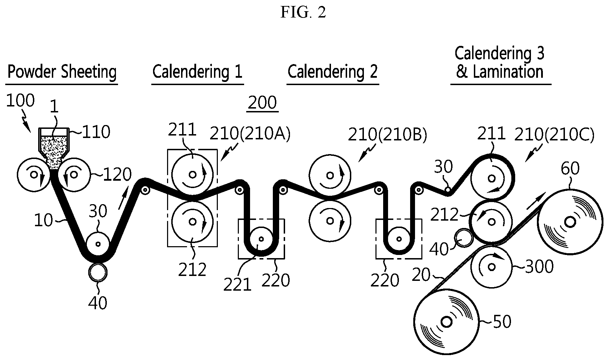

FIG. 2 is a schematic diagram of an electrode manufacturing apparatus according to a first embodiment of the present disclosure.

As shown in FIG. 2, the electrode manufacturing apparatus according to the present disclosure includes a powder sheeting device 100, a calendaring device 200 and a lamination roll 300.

The powder sheeting device 100 manufactures an electrode sheet 10 by rolling a dry material 1 until the electrode sheet 10 reaches a target porosity.

The powder sheeting device 100 includes a hopper 110 accommodating the dry material 1 including an electrode active material and a pair of feed rolls 120 that are disposed below the hopper 110 facing each other and rotate, and the dry material 1 is fed into the pair of feed rolls 120 where rolling is performed to obtain the electrode sheet 10 in a film shape. In this instance, in addition to the electrode active material, the dry material 1 may include various types of additives, and for example, may further include a conductive material and a binder.

The electrode active material may include any material commonly used in positive and negative electrodes of lithium secondary batteries.

The conductive material is used to improve electrical conductivity of the electrode, and may include any conductive material commonly used in the technical field of lithium secondary batteries.

The binder helps to bind the electrode active material and the conductive material together and adhere to a current collector 20, and may include any binder commonly used in the technical field of lithium secondary batteries.

The dry material 1 in a mixed state is fed into the pair of feed rolls 120 arranged side by side in the horizontal or vertical direction (horizontal in the present disclosure for convenience of understanding), and is compacted by rolling. This process is performed to shape the dry material 1 mixed in powder state into a sheet, so the gap between the pair of feed rolls 120 included in the powder sheeting device 100 may be larger than the gap between a pair of rolling rolls 211,212 included in the calendaring device 200. Additionally, the dry material may be shaped into the sheet by applying a shear force at different rotational speeds of the pair of feed rolls 120. As a speed ratio of the pair of feed rolls 120 increases, the thickness of the sheet decreases and the density decreases. Accordingly, the dry material 1 is shaped into the sheet having desired thickness and density by properly setting the speed ratio and the gap between the feed rolls.

The electrode sheet 10 rolled by the pair of feed rolls 120 moves down and is supported by a plurality of guide rolls 30 and the direction is changed to the horizontal direction. The guide rolls 30 are not operated by a driving motor, and rotate at a fixed location to support the film supported with minimal friction to move it smoothly.

The edge portions of the electrode sheet 10 having undergone rolling through the feed rolls 120 are generally very rough and irregular, so two edge portions of the electrode sheet 10 in the width direction are cut by a slitting unit 40 to make the length of the electrode sheet in the width direction uniform. Here, the slitting unit 40 may include, for example, a predetermined cutting blade to cut the two edge portions of the electrode sheet 10 in the width direction and a motor to drive the cutting blade.

As shown in FIG. 2, the slitting unit 40 may be disposed between the feed rolls 120 and the calendaring device 200 to cut the two edge portions of the electrode sheet before the calendaring process. Additionally, the slitting unit 40 may be disposed facing toward the lower rolling roll 212 of a third rolling unit 210C as described below to cut the two edge portions of the electrode sheet once more immediately before the lamination process after the calendaring process.

The calendaring device 200 is configured to perform multi-stage rolling on the electrode sheet 10 supplied from the powder sheeting device 100 to obtain the target thickness before laminating the electrode sheet 10 and the current collector 20.

Hereinafter, the calendaring device 200 according to the first embodiment of the present disclosure will be described with reference to FIGs. 2 to 5.

The calendaring device 200 includes a plurality of rolling units 210 spaced apart from each other, each rolling unit including a pair of rolling rolls that are disposed facing each other and rotate, and a tension control unit 220. For example, as shown in FIG. 2, the rolling units 210 may include a first rolling unit 210A, a second rolling unit 210B and a third rolling unit 210C, and each rolling unit may include the pair of rolling rolls 211,212 and be spaced a predetermined distance apart from each other in the horizontal direction.

The rolling unit 210 may include the pair of rolling rolls 211,212 that rotate with a predetermined gap between them, and while the electrode sheet 10 passes between the rolling rolls 211,212, the thickness of the electrode sheet 10 may be adjusted as much as the gap between the rolling rolls. Specifically, the pair of rolling rolls 211,212 are arranged side by side in the vertical or horizontal direction (vertical in the present disclosure for convenience of understanding) and rotate in different directions to compress the electrode sheet 10 passing between them, thereby reducing the thickness of the electrode sheet 10 and stretching the electrode sheet 10 in the length direction. Through the compression, particles included in the electrode sheet 10 may be elongated, and the electrode sheet 10 may become denser.

More specifically, the rolling unit 210 includes an upper rolling roll 211 and a lower rolling roll 212 located below the upper rolling roll 211, the upper rolling roll 211 and the lower rolling roll 212 facing each other. Any one of the upper rolling roll 211 or the lower rolling roll 212 may move toward the opposite rolling roll. That is, the gap between the rolling rolls may be adjusted by the movement of the rolling roll. **In** this instance, the thickness of the electrode sheet 10 passing through the corresponding rolling unit 210 is adjusted as much as the gap between the upper rolling roll 211 and the lower rolling roll 212. When the electrode sheet 10 is only transported in the right direction, the upper rolling roll 211 rotates in the counterclockwise direction, and the lower rolling roll 212 rotates in the clockwise direction. For example, the first rolling unit 210A or the second rolling unit 210B may transport the electrode sheet 10 in the right direction by counterclockwise rotation of the upper rolling roll 211 and clockwise rotation of the lower rolling roll 212, and the third rolling unit 210C may transport the electrode sheet 10 in the left direction by clockwise rotation of the upper rolling roll 211 and counterclockwise rotation of the lower rolling roll 212.

In the present disclosure, the rotational speed of the upper rolling roll 211 and the rotational speed of the lower rolling roll 212 may be adjusted to be equal or different from each other. For example, when the rotational speed of the upper rolling roll 211 and the rotational speed of the lower rolling roll 212 are adjusted to be equal, the density of the electrode sheet 10 may increase, and when the rotational speed of the upper rolling roll 211 and the rotational speed of the lower rolling roll 212 are adjusted to be different from each other, the thickness of the electrode sheet may decrease.

The plurality of rolling units 210 may have a smaller gap between the pair of rolling rolls toward the transport direction of the electrode sheet 10. That is, the gap between the upper rolling roll 211 and the lower rolling roll 212 of the third rolling unit 210C that compresses the electrode sheet 10 lastly may be smaller than the gap between the upper rolling roll 211 and the lower rolling roll 212 of the first rolling unit 210A that compresses the electrode sheet 10 first. This is because when the electrode sheet 10 in the initial condition when introduced into the calendaring process is shaped into the desired thickness by single compression, the electrode sheet 10 may be broken or crumped during the process. Instead, when multi-stage compression is applied to the electrode sheet 10, the burden applied to the electrode sheet 10 reduces, thereby stably manufacturing the electrode sheet 10 with the desired thickness.

Referring back to FIG. 2, it can be seen that the calendaring device 200 of the present disclosure includes the tension control unit 220 to measure the tension applied to the electrode sheet 10 transported between the rolling units 210 and control the rotational speed of the rolling rolls.

The tension control unit 220 may be configured to control the rotational speed of each rolling roll included in the rolling unit 210 disposed either in front of the electrode sheet 10 or behind the electrode sheet 10 or both.

For example, when the tension in the electrode sheet 10 is high, the tension control unit 220 decelerates the rotational speed of the rolling roll disposed behind the electrode sheet 10 (or accelerates the rotational speed of the rolling roll disposed in front of the electrode sheet 10), and when the tension in the electrode sheet 10 is low, the tension control unit 220 accelerates the rotational speed of the rolling roll disposed behind the electrode sheet 10. In this instance, the rotational speed ratio of the rolling rolls rotating in pair may be maintained.

Specifically, the tension control unit 220 included in the calendaring device 200 according to the first embodiment of the present disclosure includes a tension maintaining roll 221 that is located on the electrode sheet 10 and rotates and a displacement detector 225 to measure the displacement of the tension maintaining roll 221, and controls the rotational speed of the rolling roll based on the displacement of the tension maintaining roll 221 detected by the displacement detector 225. Here, the tension maintaining roll 221 may be a dancer roll.

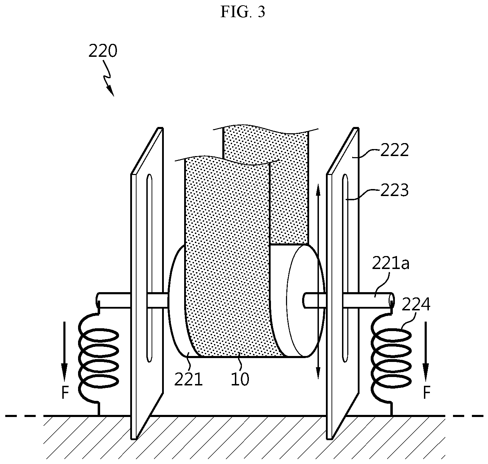

The structure, operation and control system of the tension control unit 220 that controls the rotational speed of the rolling roll will be described in more detail with reference to FIGs. 3 to 5.

Referring to FIG. 3, it can be seen that the tension maintaining roll 221 is located on the electrode sheet 10 to transmit constant load to the electrode sheet 10.

Additionally, the tension control unit 220 may further include a guide member 222 including a guide slit 223 coupled to two rotation axes of the tension maintaining roll 221 to guide the tension maintaining roll 221 to move up and down, and a loading member 224 connected to the rotation axis of the tension maintaining roll 221 to apply the constant load (force (F)) to the tension maintaining roll 221.

The tension maintaining roll 221 may be rotatably coupled to the rotation axis. For example, the tension maintaining roll 221 and the rotation axis may be connected through a bearing (not shown). Each rotation axis that sticks out from each of two sides of the tension maintaining roll 221 may be coupled to the guide member 222. Specifically, the rotation axis may be inserted and supported by the guide slit 223 formed along the height direction of the guide member 222. The guide member 222 is secured to the ground, and the rotation axis moves up and down along the guide slit 223 and supports the tension maintaining roll 221.

The tension maintaining roll 221 may be kept under the constant load (force (F)) in the direction of gravitational force, and the electrode sheet 10 is subjected to the constant force F through the tension maintaining roll 221 by the load. The load may be directly transmitted to the rotation axis connected to the tension maintaining roll 221. Specifically, the load may be generated by the loading member 224 connected to the rotation axis. The loading member 224 may include, for example, a spring, air cylinder (not shown), a weight (not shown) and the like, and the constant load may be applied to the tension maintaining roll 221 by the loading member 224. When a spring is taken as an example, one end of the spring may be coupled to the rotation axis, and the other end may be secured to the ground. The load may be limited by the restoring force and length of the spring secured to the ground.

As a result, the tension maintaining roll 221 continuously applies the constant load as much as the restoring force of the spring to the electrode sheet 10.

The displacement detector 225 is configured to measure a position change of the tension maintaining roll 221. The displacement detector 225 may include any detector commonly used to measure the displacement of a dancer roll, and in the present disclosure, the measurement method is not limited to a particular method.

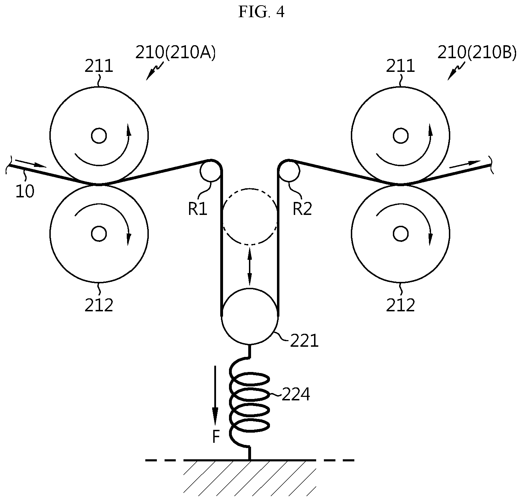

Subsequently, referring to FIG. 4, it can be seen that each rolling unit 210 including the upper rolling roll 211 and the lower rolling roll 212 is disposed in front of the tension maintaining roll 221 and behind the tension maintaining roll 221, and the electrode sheet 10 passing through the rolling unit 210 located in front of the tension maintaining roll 221 passes through the rolling unit 210 located behind the tension maintaining roll 221 via the tension maintaining roll 221. A pair of support rolls R1 may be further disposed between the two rolling units 210 to support the electrode sheet 10 and change the transport direction. Specifically, the electrode sheet 10 transported from the rolling unit 210 located in front of the tension maintaining roll 221 is guided to move down by the support roll R1 and passes below the tension maintaining roll 221. Subsequently, the electrode sheet 10 passing through the tension maintaining roll 221 moves up, and is guided to move forward by the other support roll R2 and transported to the rolling unit 210 located behind the tension maintaining roll 221. In this instance, the electrode sheet 10 passing below the tension maintaining roll 221 is subjected to the constant load from the tension maintaining roll 221.

That is, the tension maintaining roll 221 is subjected to the constant force F through the spring, part of which is fixed to the ground, and the tension maintaining roll 221 applies the equal force F to the underlying electrode sheet 10. For example, when the electrode sheet 10 becomes loose, the electrode sheet 10 is weakly supported on the tension maintaining roll 221, and the tension maintaining roll 221 changes down the position. On the contrary, when the electrode sheet 10 becomes tight, the electrode sheet 10 is strongly supported on the tension maintaining roll 221, and the tension maintaining roll 221 changes up the position.

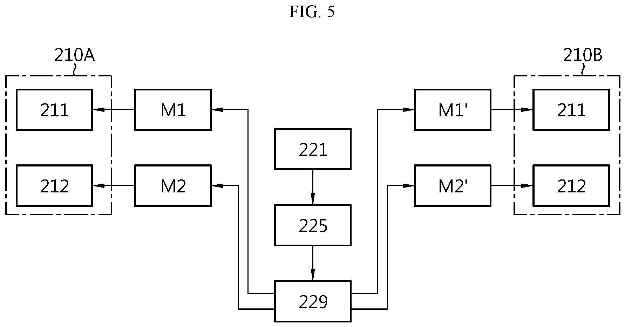

Subsequently, referring to FIG. 5, the tension control unit 220 of the present disclosure may further include a control unit 229 to control the rotational speed of the pair of rolling rolls 211,212 of the rolling unit 210.

The control unit 229 may control the rotational speed of each rolling roll based on the displacement of the tension maintaining roll 221 detected through the displacement detector 225.

For example, the tension control unit 220 may decelerate the rotational speed of the pair of rolling rolls located behind the tension maintaining roll 221 or accelerate the rotational speed of the pair of rolling rolls located in front of the tension maintaining roll 221 based on the displacement when the tension maintaining roll 221 changes up the position in order to keep the tension applied to the electrode sheet 10 constant.

For example, when the tension changes due to a difference in rotational speed between each rolling roll included in the rolling units 210, the electrode sheet may be looser or tighter than normal. The tension maintaining roll may move up and down, and the control unit 229 may control the rotational speed of each rolling roll based on the displacement detected through the displacement detector 225.

In addition, in the calendaring process, the electrode sheet may get loose or too tight due to a difference in the feed and transport speed of the electrode sheet, the rotational speed between the rolling rolls and the like, and then, the tension maintaining roll 221 may move up and down and the tension maintaining roll 221 may change the position. In this instance, the displacement of the tension maintaining roll 221 is detected by the displacement detector 225, and the detected displacement data of the tension maintaining roll 221 is transmitted to the control unit 229. The control unit 229 adjusts the rotational speed of the rolling roll included in any one of the rolling unit 210 located in front of the tension maintaining roll 221 and the rolling unit 210 located behind the tension maintaining roll 221 based on the displacement of the tension maintaining roll 221. In this instance, the rotational speed of the rotational speed may be adjusted by controlling driving motors M1,M2,M1'M2' connected to each rolling roll.

For example, when the tension maintaining roll 221 changes down the position between the first rolling unit 210A and the second rolling unit 210B, the control unit 229 decelerates, for example, the rotational speed of the pair of rolling rolls included in the first rolling unit 210A, or accelerates the rotational speed of the pair of rolling rolls included in the second rolling unit 210B. Then, the electrode sheet 10 while under the constant tension by the tension maintaining roll may be transported at optimum speed without becoming loose.

For example, when the tension maintaining roll 221 changes down the position between the first rolling unit 210A and the second rolling unit 210B, the control unit 229 decelerates, for example, the rotational speed of the pair of rolling rolls included in the first rolling unit 210A or accelerates the rotational speed of the pair of rolling rolls included in the second rolling unit 210B. Then, the electrode sheet 10 while keeping tension at optimum level by the tension maintaining roll 221 may be transported at optimum speed without becoming loose.

In another example, when the tension maintaining roll 221 changes up the position, the control unit 229 accelerates, for example, the rotational speed of the pair of rolling rolls included in the first rolling unit 210A or decelerates the rotational speed of the pair of rolling rolls included in the second rolling unit. Then, the electrode sheet 10 while keeping tension at optimum level by the tension maintaining roll 221 may be transported without becoming too tight.

As described above, along with the control unit 229, the tension maintaining roll 221 plays a role in detecting the tension change of the electrode sheet 10 through the upward and downward movement, controlling the rotational speed of the rolling roll included in the rolling unit 210 located in front of the electrode sheet 10 or behind the electrode sheet 10, and keeping constant tension on the electrode sheet 10.

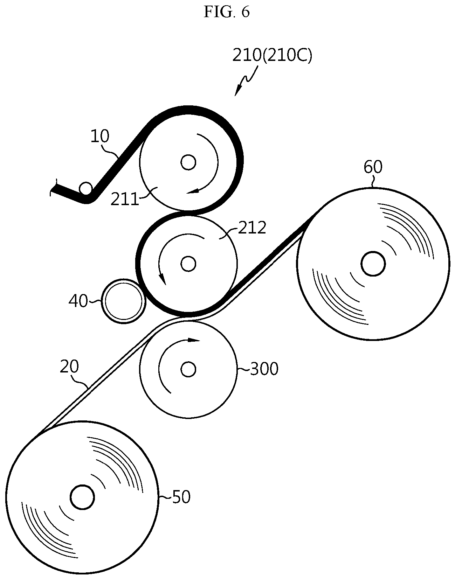

Subsequently, referring to FIG. 6, the electrode manufacturing apparatus according to the present disclosure includes the lamination roll 300 to laminate the current collector 20 and the rolled electrode sheet 10 with the target thickness through the calendaring device to form the electrode. The single lamination roll 300 is disposed facing toward one of the pair of rolling rolls of the third rolling unit 210C that rolls the electrode sheet 10 lastly.

For example, as shown in the exemplary configuration of FIG. 6, the lamination roll may be disposed directly facing toward the lower rolling roll 212 of the third rolling unit 210C so that the electrode sheet 10 having the reduced thickness after the calendaring process by the third rolling unit 210C, i.e., the last calendaring process (as shown in the conventional art of FIG. 1) is not transported in air until it is joined to the current collector 20 (lamination). That is, according to the above-described configuration of the present disclosure, the electrode sheet 10 is not transported in air until it is joined to the current collector 20 (lamination) after the last calendaring process, and thus tension is hardly applied to the electrode sheet 10, thereby minimizing the likelihood that the electrode sheet 10 will be broken, and accordingly the lamination process may be stably performed, thereby improving the electrode production yield.

More specifically, the calendaring process by the third rolling unit 210C, i.e. the last calendaring process and the lamination process may be continuously performed by three rollers arranged in the vertical (top-bottom) direction. Here, the three rollers refer to the upper rolling roll 211 and the lower rolling roll 212 of the third rolling unit 210C and the lamination roll 300. Additionally, the upper rolling roll 211 of the third rolling unit 210C may be configured to rotate in the clockwise direction, the lower rolling roll 212 may be configured to rotate in the counterclockwise direction, and the lamination roll 300 may be configured to rotate in the clockwise direction.

By the above-described configuration, the electrode sheet 10 may move along the circumference of the upper rolling roll 211 in the clockwise direction and pass between the upper rolling roll 211 and the lower rolling roll 212, and finally may be rolled with the target thickness, and with change in the transport direction, transported along the circumference of the lower rolling roll 212 in the counterclockwise rotation direction.

The slitting process may be performed again during the transport of the electrode sheet 10 along the circumference of the lower rolling roll 212 in the counterclockwise direction. This is to cut the two irregular edges of the electrode sheet 10 in the width direction after rolling by the last calendaring process, in order to make the length of the electrode sheet 10 in the width direction uniform. Accordingly, the slitting unit 40 may be disposed facing toward the lower rolling roll 212 at a more front location than the lamination roll 300 and configured to cut the two ends of the electrode sheet 10 in the width direction. The slitting unit 40 may be a rotatable disc-shaped cutting blade.

The electrode sheet 10 whose two ends in the width direction have been cut through the slitting process moves along the circumference of the lower rolling roll 212 in the counterclockwise direction and passes between the lower rolling roll 212 and the lamination roll 300. In this instance, the electrode sheet 10 and the current collector 20 supplied from a current collector feed roll 50 may be laminated by heat and pressure while both are passing through the lower rolling roll 212 and the lamination roll 300. The current collector 20 is joined to the lower surface of the electrode sheet 1 since the current collector feed roll 50 is located below the electrode sheet 10 being transported.

Here, the current collector 20 may be made of stainless steel, aluminum, nickel, titanium, sintered carbon, copper, stainless steel treated with copper/carbon/nickel/titanium/silver on the surface, an aluminum alloy, etc. The current collector 20 may include any current collector 20 commonly used in the technical field of lithium secondary batteries.

In general, an electrode is manufactured by coating an electrode slurry on the current collector 20 and drying the electrode slurry, wherein the electrode slurry is prepared by dispersing an electrode material in a solvent. However, the present disclosure does not need a drying process since the electrode sheet 10 manufactured by rolling the dry material 1 without using a solvent is directly joined to the current collector 20 (lamination).

As described above, the electrode sheet 10 may be manufactured with the target thickness, density, porosity and the like through the calendaring process and the slitting process, and the dry electrode film may be completed through the lamination process of laminating the electrode sheet 10 and the current collector 20. The dry electrode film while wound on a winding roll 60 may be stored or transported.

Meanwhile, the electrode sheet may be joined to the opposite surface of the single side laminated electrode film manufactured as described above to manufacture a double side laminated electrode (In this case, the current collector of the current collector feed roll 50 of FIG. 6 may be replaced with the single side laminated electrode film). Alternatively, for example, the double side laminated electrode may be manufactured by installing another calendaring device and another slitting device facing toward the above-described calendaring device and the above-described slitting device.

Subsequently, the electrode manufacturing apparatus according to the second embodiment of the present disclosure will be described with reference to the accompanying drawings.

The same reference numerals as the first embodiment indicate the same elements, and redundant descriptions of the same elements are omitted and difference(s) between this embodiment and the previous embodiment will be described.

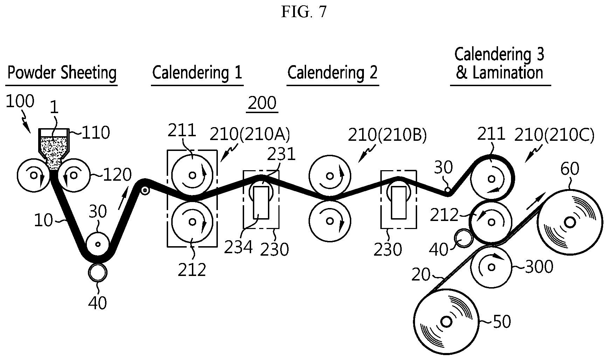

That is, as shown in FIG. 7, the electrode manufacturing apparatus according to the second embodiment of the present disclosure is substantially the same as the above-described first embodiment except the tension control unit 230 of the calendaring device 200. Accordingly, the tension control unit 230 according to the second embodiment will be described in detail.

The tension control unit 230 included in the calendaring device 200 according to the second embodiment of the present disclosure includes a tension sensing roll 231 that rotates in contact with one surface of the electrode sheet 10 and a sensor 233 to measure a load change of the tension sensing roll 231, and the rotational speed of the rolling roll is controlled according to the load change measured by the sensor 233.

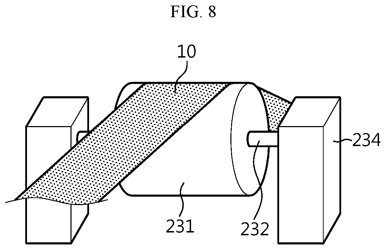

FIG. 8 is a schematic perspective view of the tension control unit 230 of the present disclosure.

Referring to FIG. 8, the tension control unit 230 of the present disclosure may include a support block 234 to support the tension sensing roll 231 on two sides of the tension sensing roll 231 and measure the load change of the tension sensing roll 231. Specifically, it can be seen that the tension sensing roll 231 supports the electrode sheet 10 while rotating in contact with one surface of the electrode sheet 10, and a rotation axis 232 passes through the tension sensing roll 231. The tension sensing roll 231 may be supported on the rotation axis 232 and rotate around the rotation axis 232. The rotation axis 232 that sticks out from each of two side of the tension sensing roll 231 may be coupled to the support block 234. Specifically, the rotation axis 232 may be inserted and supported by a groove (not shown) formed on the side of the support block 234. The sensor 233 may be disposed at a part of the groove that contacts the rotation axis 232 to detect the weight change of the rotation axis 232 (For reference, the sensor 233 may be installed below the support block 234 and configured to measure the weight change).

The sensor 233 disposed at the groove detects the weight change of the rotation axis 232 that supports the tension sensing roll 231, and this principle is similar to an electronic scale commonly used to measure weight.

The tension sensing roll 231 is located below the electrode sheet 10 and constant tension is transmitted from the electrode sheet 10. In this instance, when the tension of the electrode sheet 10 is high, the pressing force F applied to the underlying tension sensing roll 231 increases and the load of the tension sensing roll 231 recorded in the sensor 233 increases. On the contrary, when the tension of the electrode sheet 10 is low, the pressing force F applied to the underlying tension sensing roll 231 decreases and the load of the tension sensing roll 231 recorded in the sensor 233 decreases.

The sensor 233 measures the load change of the tension sensing roll 231 transmitted through the rotation axis 232. The sensor 233 may be replaced with a load cell commonly used to measure changes in the force F and pressure applied to the roll.

In the similar way to the first embodiment, the tension control unit 230 according to the second embodiment may include the control unit 229 to control the rotational speed ratio of the pair of rolling rolls.

The control unit 229 controls the rotational speed of the rolling roll to accelerate or decelerate depending on the load change of the tension sensing roll 231 measured by the sensor 233.

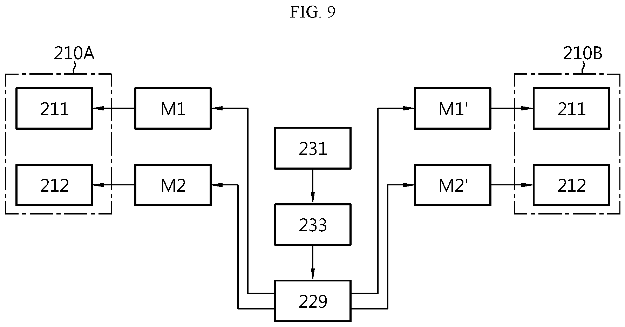

Referring to FIGs. 8 and 9, the load of the tension sensing roll 231 subjected to load in the direction of gravitational force by the tension of the electrode sheet 10 changes in proportion to the tension change of the electrode sheet 10. The load change of the tension sensing roll 231 is detected by the sensor 233 and the change in load of the tension sensing roll 231 is transmitted to the control unit 229. The control unit 229 adjusts, for example the rotational speed of the rolling roll included in any one of the first rolling unit 210A located in front of the tension sensing roll 231 and the second rolling unit 210B located behind the tension sensing roll 231 based on the change in load of the tension sensing roll 231. In this instance, the rotational speed of the rolling roll is adjusted by controlling the rotational speed of the driving motors M1,M2,M1',M2' connected respectively to the rolling rolls 211,212.

In an example, when the tension of the electrode sheet 10 decreases and the load of the tension sensing roll 231 decreases, the control unit 229 accelerates, for example, the rotational speed of the pair of rolling rolls included in the second rolling unit 210B. In this instance, in the case where the decreased tension of the electrode sheet 10 is not detected and the process continues, the electrode sheet 10 may not be transported properly due to the loose electrode sheet 10, or the electrode sheet 10 wound on the rolling roll may be jammed or crumped.

In another example, when the tension of the electrode sheet 10 increases and the load of the tension sensing roll 231 increases, the control unit 229 decelerates, for example, the rotational speed of the pair of rolling rolls included in the second rolling unit 210B. In this instance, in the case where the increased tension of the electrode sheet 10 is not detected and the process continues, the electrode sheet 10 may be broken during the process due to the tight electrode sheet 10.

As described above, the tension control unit 230 may play a role in detecting the tension change of the electrode sheet 10 through the load change of the tension sensing roll 231, controlling the rotational speed of the rolling roll included in the rolling unit located in front of the electrode sheet 10 or behind the electrode sheet 10, and adjusting the tension of the electrode sheet 10.

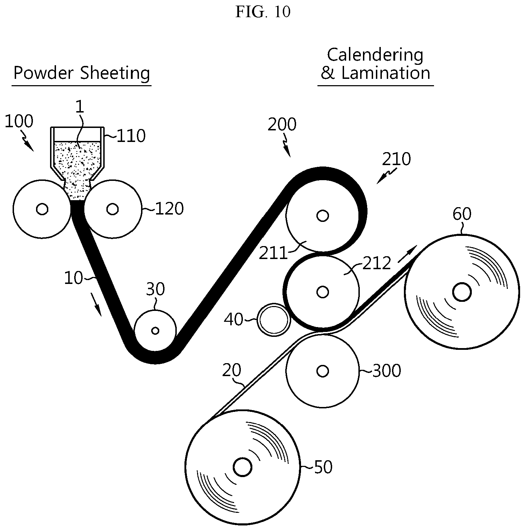

FIG. 10 is a schematic diagram of the electrode manufacturing apparatus according to the third embodiment of the present disclosure.

Subsequently, the electrode manufacturing apparatus according to the third embodiment of the present disclosure will be described.

The same reference numerals as the previous embodiment indicate the same elements, and redundant descriptions of the same elements are omitted and difference(s) between this embodiment and the previous embodiment will be described.

When compared with the first and second embodiments, the electrode manufacturing apparatus according to the third embodiment of the present disclosure is characterized in that the number of rolling units 210 included in the calendaring device is one. That is, by the electrode manufacturing apparatus according to the third embodiment, the electrode sheet 10 is manufactured with the target thickness by performing the calendaring process one time, and as shown in FIG. 10, each of the slitting unit and the lamination roll 300 is disposed facing toward the lower rolling roll 212 to perform the slitting process and the lamination process respectively while the electrode sheet 10 moves along the circumference of the lower rolling roll 212.

When compared with the electrode manufacturing apparatus according to the first or second embodiment, the electrode manufacturing apparatus according to the third embodiment includes one rolling unit and the other additional devices including the tension control units 220,230 may be omited, thereby making it easy to install and operate the apparatus and significantly reducing the apparatus installation cost.

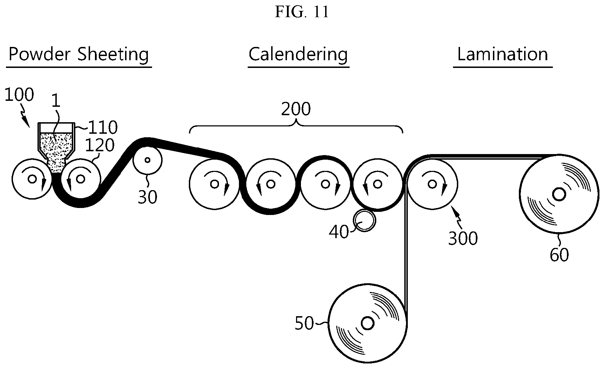

FIG. 11 is a schematic diagram of the electrode manufacturing apparatus according to the fourth embodiment of the present disclosure.

As shown in FIG. 11, the electrode manufacturing apparatus according to the fourth embodiment of the present disclosure may include the powder sheeting device 100, the calendaring device 200 and the lamination roll 300. In particular, the plurality of rolling rolls of the calendaring device 200 according to this embodiment may be continuously arranged at a predetermined interval in the horizontal direction. In this case, when compared with the electrode manufacturing apparatus according to the first embodiment or the second embodiment, the other additional devices including the tension control units 220,230 may be omitted. Additionally, compared to the third embodiment, it may be possible to additionally roll the electrode film.

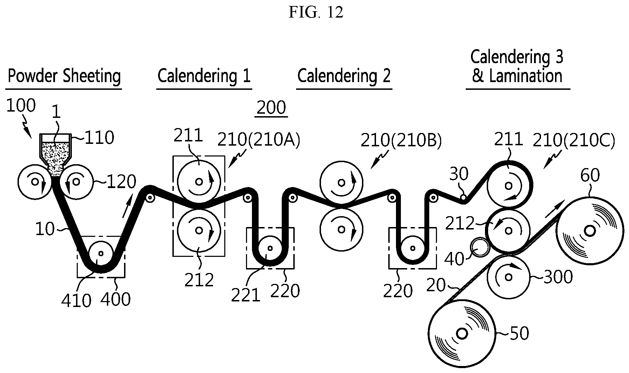

FIG. 12 is a schematic diagram of the electrode manufacturing apparatus according to the fifth embodiment of the present disclosure.

The same reference numerals as the previous embodiment indicate the same elements, and redundant descriptions of the same elements are omitted and difference(s) between this embodiment and the previous embodiment will be described.

The electrode manufacturing apparatus according to the present disclosure may further include a preliminary tension control unit 400 between the powder sheeting device 100 and the rolling unit 210 of the calendaring device 200. The preliminary tension control unit 400 may have substantially the same configuration and function as the tension control unit 220. The preliminary tension control unit 400 may be disposed at the location of the guide roll 30 between the powder sheeting device 100 and the rolling unit 210 of the calendaring device 200 as shown in each of FIGs. 2, 7, 10 and 11. In this case, the guide roll 30 may be omitted.

Specifically, as shown in FIG. 12, the electrode manufacturing apparatus according to the fifth embodiment of the present disclosure may include the preliminary tension control unit 400 between the powder sheeting device 100 and the rolling unit 210 of the calendaring device 200.

The preliminary tension control unit 400 may be configured to control the rotational speed of the pair of feed rolls 120 disposed in front of the electrode sheet 10 or the pair of rolling rolls 211,212 disposed behind the electrode sheet 10, or to control the rotational speed ratio of the pair of feed rolls 120 and/or the pair of rolling rolls 211,212.

Additionally, the preliminary tension control unit 400 may include a tension maintaining roll 410 that rotates on the electrode sheet 10 and a displacement detector (not shown) to measure the displacement of the tension maintaining roll 410, and may be configured to control the rotational speed of the feed rolls 120 or the rolling rolls 211,212 based on the displacement of the tension maintaining roll 221 detected by the displacement detector.

For example, when the tension of the electrode sheet 10 is high, the preliminary tension control unit 400 decelerates the rotational speed of the pair of rolling rolls 211,212 disposed behind the electrode sheet 10 (or accelerates the rotational speed of the pair of feed rolls 120 disposed in front of the electrode sheet 10), and when the tension of the electrode sheet 10 is low, on the contrary, the preliminary tension control unit 400 accelerates the rotational speed of the pair of rolling rolls 211,212 disposed behind the electrode sheet 10. In this instance, the rotational speed ratio of the rolling rolls 211,212 rotating in pair may be maintained. The other components of the preliminary tension control unit 400 are replaced with the above description of the tension control unit 200.

By the preliminary tension control unit 400 according to the fifth embodiment of the present disclosure, the electrode sheet 10 rolled by the pair of feed rolls 120 and traveling downward may be guided to move up by support of the tension maintaining roll 410 of the preliminary tension control unit 400. Additionally, it may be possible to remove the feeding problem of the electrode sheet 10 between the powder sheeting device 100 and the calendaring device 200 such as jams, thereby improving the electrode manufacturing process.

While the present disclosure has been hereinabove described with regard to a limited number of embodiments and drawings, the present disclosure is not limited thereto and it is apparent that a variety of changes and modifications may be made by those skilled in the art within the technical aspect of the present disclosure and the scope of the appended claims and their equivalents.

The terms indicating directions such as upper, lower, left, right, front and rear are used for convenience of description, but it is obvious to those skilled in the art that the terms may change depending on the position of the stated element or an observer.

## Claims

1. An electrode manufacturing apparatus for manufacturing a dry electrode, comprising:
a powder sheeting device configured to shape a dry material including an electrode active material into a sheet;
a calendaring device including at least one rolling unit, each rolling unit including a pair of rolling rolls to roll the electrode sheet supplied from the powder sheeting device; and
a single lamination roll configured to laminate a current collector and the rolled electrode sheet with a target thickness through the calendaring device to form an electrode,
wherein the lamination roll is disposed facing toward one of the pair of rolling rolls of the rolling unit that rolls the electrode sheet lastly.

2. The electrode manufacturing apparatus according to claim 1, wherein the rolling unit includes:
an upper rolling roll; and
a lower rolling roll located below the upper rolling roll, and
wherein a thickness of the electrode sheet is adjusted as much as a gap between the upper rolling roll and the lower rolling roll.

3. The electrode manufacturing apparatus according to claim 2, wherein the lamination roll is disposed facing toward the lower rolling roll, and
wherein the electrode sheet and the current collector are compressed together while passing between the lamination roll and the lower rolling roll.

4. The electrode manufacturing apparatus according to claim 2, further comprising:
a slitting unit to cut an edge of the electrode sheet,
wherein the slitting unit is disposed facing toward the lower rolling roll facing toward the lamination roll.

5. The electrode manufacturing apparatus according to claim 4, wherein the slitting unit is configured to cut two end portions of the electrode sheet in a width direction passing between the upper rolling roll and the lower rolling roll.

6. The electrode manufacturing apparatus according to claim 1, wherein the at least one rolling unit includes a plurality of rolling units arranged spaced apart from each other, and
wherein the calendaring device further includes a tension control unit to measure a tension applied to the electrode sheet transported between the rolling units and control a rotational speed of the rolling roll.

7. The electrode manufacturing apparatus according to claim 6, wherein the tension control unit is configured to control the rotational speed of each rolling roll of the rolling unit disposed either in front of the electrode sheet or behind the electrode sheet or both, or
wherein the tension control unit is configured to control a rotational speed ratio of the pair of rolling rolls of the rolling unit.

8. The electrode manufacturing apparatus according to claim 6, wherein at high tension in the electrode sheet, the tension control unit decelerates the rotational speed of the rolling roll disposed behind the tension control unit (or accelerates the rotational speed of the rolling roll disposed in front of the tension control unit), and
wherein at low tension in the electrode sheet, the tension control unit accelerates the rotational speed of the rolling roll disposed behind the tension control unit (or decelerates the rotational speed of the rolling roll disposed in front of the tension control unit).

9. The electrode manufacturing apparatus according to claim 6, wherein the tension control unit includes:
a tension maintaining roll that is located on the electrode sheet and rotates; and
a displacement detector to measure a displacement of the tension maintaining roll, and
wherein the tension control unit measures the tension of the electrode sheet according to the displacement measured by the displacement detector, and controls the rotational speed of the rolling roll based on the tension.

10. The electrode manufacturing apparatus according to claim 9, wherein the tension control unit further includes:
a guide member including a guide slit coupled to two rotation axes of the tension maintaining roll to guide the tension maintaining roll to move up and down; and
a loading member connected to the tension maintaining roll to apply constant load to the tension maintaining roll.

11. The electrode manufacturing apparatus according to claim 9, wherein the tension control unit decelerates the rotational speed of the rolling roll located behind the tension maintaining roll (or accelerates the rotational speed of the rolling roll disposed in front of the tension maintaining roll) based on the displacement when the tension maintaining roll changes up the position, and
wherein the tension control unit accelerates the rotational speed of the rolling roll located behind the tension maintaining roll (or decelerates the rotational speed of the rolling roll disposed in front of the tension maintaining roll) based on the displacement when the tension maintaining roll changes down the position.

12. The electrode manufacturing apparatus according to claim 6, wherein the tension control unit includes:
a tension sensing roll that is located on the electrode sheet and rotates; and
a sensor to measure a load change of the tension sensing roll, and
wherein the rotational speed of the rolling roll is controlled according to the load change measured by the sensor.

13. The electrode manufacturing apparatus according to claim 12, wherein the tension control unit decelerates the rotational speed of the rolling roll disposed behind the tension sensing roll (or accelerates the rotational speed of the rolling roll disposed in front of the tension sensing roll) based on the load change when the load of the tension sensing roll increases, and accelerates the rotational speed of the rolling roll located behind the tension sensing roll (or decelerates the rotational speed of the rolling roll disposed in front of the tension sensing roll) based on the load change when the load of the tension sensing roll decreases.

14. The electrode manufacturing apparatus according to claim 6, wherein the powder sheeting device includes a pair of feed rolls to roll the dry material into a sheet shape, and
wherein the electrode manufacturing apparatus further comprises a preliminary tension control unit to measure the tension applied to the electrode sheet transported between the powder sheeting device and the rolling unit and control the rotational speed of the feed roll or the rolling roll.

15. The electrode manufacturing apparatus according to claim 1, wherein the at least one rolling unit is a single rolling unit.

16. The electrode manufacturing apparatus according to claim 1, further comprising:
a winding roll on which the electrode is wound.
